# EUROPÄISCHE PATENTANMELDUNG

(11) **EP 2 216 441 A2**
(43) Veröffentlichungstag der Anmeldung: **11.08.2010**
(21) Anmeldenummer: 10152507.9
(22) Anmeldetag: 03.02.2010
(51) Int. Cl.: E01B 35/00

(54) **Nivelliersystem für Bahntechnik**

(30) Priorität: 05.02.2009 DE 102009003435; 26.05.2009 DE 102009025863
(71) Anmelder: Windhoff Bahn- und Anlagentechnik GmbH, 48431 Rheine (DE)
(72) Erfinder: Holters, Heinrich, 48683 Ahaus-Alstaette (DE); Glaesner, Holger, 49545 Tecklenburg (DE)
(74) Vertreter: Habbel, Ludwig

(57) **Zusammenfassung**

Nivelliersystem für die Bahntechnik vor, wobei mehrere Messpunkte mittels einer elektronischen Schlauchwaage (5) miteinander verbunden sind, derart, dass Höhenunterschiede zwischen den Messpunkten mittels der Sensoren (B1 bis B4) der elektronischen Schlauchwaage (5) erfassbar sind, und wobei eine Auswerteelektronik vorgesehen ist, welche die Sensordaten erfasst und verarbeitet und wobei jedem Messpunkt ein höhenverstellbarer Aktuator zugeordnet ist, und eine elektronische Steuerung vorgesehen ist, welche die Aktuatoren bedarfsweise derart ansteuert, dass diese den jeweiligen Messpunkt nach oben oder nach unten bewegen, bis alle Messpunkte in derselben horizontalen Ebene liegen.

## Beschreibung

Die Erfindung betrifft ein Nivelliersystem für die Bahntechnik.

Als Nivelliersystem wird im Rahmen des vorliegenden Vorschlags ein System verstanden, welches es ermöglicht, mehrere im Raum angeordnete Punkte in eine definierte Höhenlage zu bringen bzw. deren Höhenlage zu erfassen. Es kann sich dabei beispielsweise um in einer horizontalen Ebene liegende Punkte handeln oder um Punkte, die in einer schrägen Ebene angeordnet sind.

Im Bereich der Bahntechnik ist es einerseits bekannt, zur Messung von Wagenkästen diese Wagenkästen anzuheben, um zu überprüfen, ob die Wagenkästen in sich verzogen sind. An beispielsweise vier Hebepunkten werden die Wagenkästen mit Hebeeinrichtungen angehoben, beispielsweise durch Hebeböcke oder mit Hilfe von Hubpratzen von Hubsäulen. Diese vier Hebepunkte werden anschließend nivelliert, derart, dass sich alle vier Hebepunkte in derselben horizontalen Ebene befinden. Anschließend wird der Auflagedruck an den vier Hebepunkten ermittelt, wobei Abweichungen der Auflagedrücke anzeigen, ob und wie stark der Wagenkasten verformt ist.

Dabei tritt in der Praxis das Problem auf, die vier Hebepunkte korrekt zu nivellieren. Die dazu erforderliche Genauigkeit hängt vom Bediener der Hubeinrichtungen ab, also von dessen Erfahrung, Genauigkeit und Tagesform. Setz- oder Absenkbewegungen im Fundament, oder Durchbiegungen in den Hubeinrichtungen sind dabei auszugleichen, so dass in der Praxis die korrekte Nivellierung stets problematisch ist.

Ein anderes Anwendungsbeispiel im Bereich der Bahntechnik für den Einsatz eines Nivelliersystems besteht darin, dass Gleise vermessen werden. Bei einem geradlinig verlaufenden Gleis sollten die beiden das Gleis bildenden Schienen vorzugsweise in derselben horizontalen Ebene angeordnet sein, also höhengleich verlaufen. In Kurven hingegen kann eine bewusste Überhöhung der Kurve vorgesehen sein, um Entgleisungen vorzubeugen. Für die Gleisvermessung eingesetzte Nivelliersysteme dienen in diesem Zusammenhang nicht dazu, die Gleise zu nivellieren, also höhengleich auszurichten, sondern dazu, rein messtechnisch die Lage der Schienen zu erfassen, so dass die tatsächliche Lage der Schiene mit Soll-Werten verglichen werden kann. Als Nivelliersystem wird zu diesen Zwecken beispielsweise ein Inklinometer verwendet, welches die Neigung eines das zu überprüfende Gleis befahrenden Fahrzeugs misst.

Der Erfindung liegt die Aufgabe zugrunde, ein Nivelliersystem zu schaffen, welches für den Einsatz im Bereich der Bahntechnik geeignet ist und die Durchführung einer Nivellierung oder die Aufnahme von Messdaten zeitsparend und mit großer Genauigkeit ermöglicht und zudem eine zuverlässige Archivierung der Messwerte sowie eine problemlose Weiterverarbeitung der Messwerte ermöglicht.

Diese Aufgabe wird durch ein Nivelliersystem mit den Merkmalen des Anspruchs 1 gelöst. Für die beiden vorbeschriebenen Anwendungsfälle ergeben sich vorschlagsgemäß vorteilhafte Verfahrensweisen gemäß den Verfahrensschritten nach Anspruch 6, 10 oder 11.

Die Erfindung schlägt mit anderen Worten vor, eine so genannte elektronische Schlauchwaage zu verwenden. Derartige elektronische Schlauchwaagen sind seit Jahren bekannt. Sie stellen eine an sich bekannte Schlauchwaage dar, also einen flüssigkeitsgefüllten Schlauch, wobei die Flüssigkeitspegel an den beiden Enden des Schlauches automatisch erfasst werden, nämlich mittels elektronischer Sensoren, so dass die Sensorsignale mittels einer elektronischen Datenverarbeitung erfasst, weiterverarbeitet und ausgewertet werden können und insbesondere auch elektronisch protokolliert bzw. archiviert werden können.

Unabhängig von einem absoluten Höhenwert ermöglicht eine elektronische Schlauchwaage die präzise Erfassung von relativen Höhen, also von Höhenunterschieden zwischen den Messpunkten bzw. den Sensoren der elektronischen Schlauchwaage. Dabei kann vorgesehen sein, die elektronische Schlauchwaage mit mehreren und nicht nur den erwähnten zwei Sensoren auszugestalten, also einen Verbund von mehreren jeweils schematisch U-förmigen Schlauchbögen zu schaffen, so dass die Nivellierung einer Mehrzahl von Messpunkten und damit von Flächen möglich ist.

Für den erstgenannten Anwendungsfall, nämlich das Nivellieren oder das Ausrichten eines Eisenbahn-Wagenkastens, ist vorschlagsgemäß vorgesehen, dass jedem Messpunkt ein höhenverstellbarer Aktuator zugeordnet ist. Eine elektronische Steuerung, welche die Daten der Sensoren der elektronischen Schlauchwaage auswertet, steuert die Aktuatoren erforderlichenfalls an, so dass diese höhenverstellbaren Aktuatoren den jeweiligen Messpunkt nach oben oder nach unten bewegen, bis sämtliche Messpunkte in der gewünschten Ebene liegen, beispielsweise in derselben Horizontalebene. Auf diese Weise kann ein Wagenkasten vollautomatisch und höchst präzise und mit großer Wiederholgenauigkeit nivelliert werden, also horizontal ausgerichtet werden. Somit kann anschließend die Messung des Auflagedrucks an den verschiedenen Messpunkten erfolgen und daraus ein eventueller Verzug des Wagekastens festgestellt werden.

Um die Nivellierung in möglichst kurzer Zeit zu ermöglichen und ein Über- bzw. Untersteuern der einzelnen Aktuatoren zu vermeiden, ist dabei vorteilhaft ein bestimmter Messpunkt als Referenzpunkt ausgewählt, so dass der Höhenwert dieses Messpunktes bzw. Referenzpunktes als Vorgabe dient, nach welcher die Höhenanpassung der übrigen Aktuatoren erfolgt. Die übrigen Messpunkte werden in eine vorgegebene Höhe im Verhältnis zum Referenzpunkt gebracht, üblicherweise auf das gleiche Höhenniveau wie der Referenzpunkt, so dass innerhalb kürzester Zeit der Wagenkasten automatisch nivelliert ist.

Vorteilhaft kann der Auswerteelektronik ein Datenspeicher zugeordnet sein, der zur Aufnahme der Sensordaten dient oder zur Aufnahme von Daten, die aus den Sensordaten ermittelt worden sind, beispielsweise berechnet worden sind. Auf diese Weise ist die erwähnte elektronische Protokollierung bzw. Archivierung der Messungen möglich, so dass Übertragungsfehler ausgeschlossen sind, wie sie ansonsten beim manuellen Übertragen der Daten nicht auszuschließen sind. Dies gilt nicht nur für die Datenerfassung, sondern insbesondere auch wenn die Daten anschließend weiterverarbeitet werden sollen, so dass insgesamt mehrfache Datenerfassungen und Datenübertragungen erforderlich sind.

Vorteilhaft kann vorgesehen sein, die Enden der Schlauchwaage, wo sich die Sensoren befinden, von den Messpunkten lösen zu können. Es kann also vorteilhaft an wenigstens einem der Messpunkte eine Koppelfläche vorgesehen sein, an welche ein Sensor der elektronischen Schlauchwaage lösbar angekoppelt ist. Bei dem Messpunkt kann es sich beispielsweise um die Hubpratze einer Hebeeinrichtung handeln oder der Messpunkt kann unmittelbar am Wagenkasten selbst vorgesehen sein, beispielsweise in Form einer definierten Fläche, an welche der Sensor für die Messung anzubringen ist. Auch wenn die Sensoren nicht an dem Wagenkasten selbst anzubringen sind, sondern an Teilen eines Messstandes, wie beispielsweise der erwähnten Hubpratze, kann es vorteilhaft sein, den Sensor von dem Messpunkt lösen zu können. So kann beispielsweise vermieden werden, dass die Schlauchwaage im Weg liegt und Beschädigungen ausgesetzt ist oder selbst zu einer Gefahrenquelle, beispielsweise Stolperfalle, wird. Durch die Demontierbarkeit kann es ermöglicht werden, die Schlauchwaage nur zu den jeweiligen Messvorgängen und auf die Messvorgänge begrenzt an den Messpunkten anzubringen. Es kann daher auch eine Verlegung der Schlauchleitung für die Messung gewählt werden, die im Interesse möglichst kurzer Wege und einer hohen Messgenauigkeit mit möglichst kurzen Schlauchlängen auskommt. So kann die elektronische Schlauchwaage beispielsweise quer übers Gleis verlaufen oder diagonal von einem Messpunkt zu einem schräg gegenüberliegenden Messpunkt, was beispielsweise nicht möglich wäre, wenn die Schlauchwaage permanent installiert wäre und die Befahrbarkeit des Gleises durch die zu messenden Eisenbahnwagen gewährleistet sein müsste.

In besonders einfacher Ausgestaltung, die zudem eine besonders schnelle und einfache Handhabung der Schlauchwaage ermöglicht, kann vorgesehen sein, dass die von dem Messpunkten demontierbaren Sensoren jeweils magnetisch lösbar an der Koppelfläche gehalten sind. Auf diese Weise kann die Kopplung und Entkopplung der Sensoren von den Koppelflächen schnell und unkompliziert erfolgen, ohne die Erfordernis, Werkzeug oder mechanisch zu betätigende Spann- oder Halteelemente bedienen zu müssen.

Die Koppelflächen können als Messpunkte bzw. Referenzpunkte bezeichnet werden, die am Wagenkasten oder an der Hubeinrichtung vorgesehen sind.

Abgesehen von der Möglichkeit, den Wagenkasten exakt horizontal auszurichten, also zu nivellieren, kann das vorschlagsgemäße Nivelliersystem auch dazu verwendet werden, den Wagenkasten in einem Messstand bewusst schräg oder tordiert auszurichten, wenn dies für bestimmte Überprüfungen und Messungen beispielsweise vorteilhaft ist. Auch dazu kann das vorschlagsgemäße Nivelliersystem verwendet werden, indem die Aktuatoren automatisch in die jeweils vorgesehene Höhe gefahren werden.

Für die Messung von Gleiskörpern kann das vorschlagsgemäße, eine elektronische Schlauchwaage aufweisende Nivelliersystem Verwendung finden, wobei auf die höhenverstellbaren Aktuatoren und die dazu vorgesehene Steuerung verzichtet werden kann. Das Nivelliersystem ermöglicht eine besonders schnelle Erfassung des Gleises. Beispielsweise können die Messpunkte fest an einem Messwagen vorgesehen sein, so dass die elektronische Schlauchwaage die Schrägstellung dieses Messwagens erfasst.

Dabei kann vorteilhaft vorgesehen sein, nicht nur zwei, sondern wenigstens vier Messpunkte vorzusehen, also vier jeweils voneinander beabstandete Sensoren bei dem Nivelliersystem vorzusehen. Es kann beispielsweise eine auf eine bestimmte Fahrzeuggeometrie, wie die Achsabstände, abgestimmte Vermessung des Gleises erfolgen und zwar kontinuierlich, während der Messwagen über das Gleis fährt.

Sowohl die horizontale Ausrichtung eines Gleises, als auch die Lage der Schienen im Bereich von Weichen, oder auch die Überhöhung von kurvigen Gleisabschnitten kann auf diese Weise präzise erfasst werden. Wenn wenigstens vier Messpunkte vorgesehen sind, kann zudem nicht nur eine lineare Erfassung eventueller Schrägstellungen erfolgen, sondern der gesamte Gleisverlauf kann gegenüber einer horizontalen Referenzfläche dargestellt werden.

Zur Kalibrierung des vorschlagsgemäßen Nivelliersystems kann vorgesehen sein, eine Art Kalibrierschiene zu verwenden, die eine horizontal präzise ausgerichtete Kalibrierfläche aufweist. An diese Kalibrierfläche werden die Sensoren der elektronischen Schlauchwaage angeschlossen, so dass sie anschließend genullt werden können, derart, dass sie das gleiche Höhenniveau anzeigen. Dies kann entweder durch Beeinflussung der Sensoren selbst erfolgen, oder durch Beeinflussung der Auswerteelektronik, welche die Sensordaten erfasst und verarbeitet. Vorteilhaft kann die Kalibrierschiene aus einem ferromagnetischen Werkstoff bestehen, an welcher die Sensoren magnetisch gehalten werden können, so dass eine einfache und schnelle Handhabung des Nivelliersystems bei der Kalibrierung möglich ist.

Die vorliegende Erfindung wird anhand der rein schematischen Darstellungen nachfolgend näher erläutert. Dabei zeigt
- Fig. 1: in einer schematisch-perspektivischen Ansicht einen Wagenkasten innerhalb eines Messstandes und
- Fig. 2: in einer ebenfalls schematischen, perspektivischen Ansicht ein Messfahrzeug, welches ein Gleis befährt.

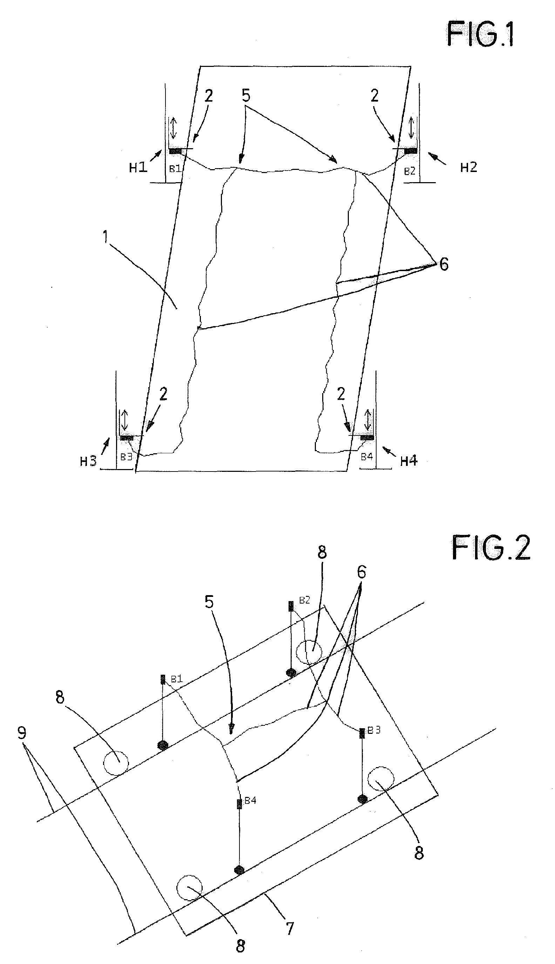

In Fig. 1 ist mit 1 ein Wagenkasten angedeutet, der sich in einem Messstand befindet. Der Messstand weist vier Hubsäulen H1 bis H4 auf, die jeweils eine Hubpratze 2 aufweisen, die sich an bzw. unter den Wagenkasten 1 erstreckt. An jede Hubpratze 2 befindet sich ein Sensor B1 bis B4 einer elektronischen Schlauchwaage 5, wobei die vier Sensoren B1 bis B4 durch insgesamt drei Schläuche 6 miteinander verbunden sind. Wie aus Fig. 1 ersichtlich ist, würden die Schläuche 6 von dem Fahrzeug, zu dem der Wagenkasten 1 gehört, überrollt. Die Sensoren B1 bis B4 der elektronischen Schlauchwaage 5 können deshalb an den Hubpratzen 2 mithilfe von so genannten "Magnetschnappern" werkzeuglos angekoppelt bzw. entkoppelt werden, so dass sie nur bedarfsweise, zur Durchführung der Messung bzw. zum Nivellieren der Hubpratzen 2 und damit des Wagenkastens 1, montiert werden. Auf diese Weise ist auch sichergestellt, dass die Schlauchwaage 5 außerhalb des Nivellierbetriebs nicht hinderlich im Wege ist und selbst nicht Beschädigungen ausgesetzt ist.

Mittels einer nicht dargestellten elektronischen Regelung werden die einzelnen Hubsäulen H1 bis H4 derart gesteuert, dass die Hubpratzen 2 automatisch anhand der Sensorsignale der elektronischen Schlauchwaage 5 nivelliert werden, d. h. auf gleiche Höhe gebracht werden, unabhängig davon, ob das Fundament, auf dem sich die einzelnen Hubsäulen H1 bis H4 befinden, selbst perfekt nivelliert ist, sowie unabhängig davon, ob sich die einzelnen Hubsäulen H1 bis H4 ggf. aufgrund unterschiedlicher Belastungen unterschiedlich durchbiegen.

In Fig. 2 ist ein Schienenfahrzeug 7 als Messwagen dargestellt. Auch an diesem Messwagen 7 ist eine elektronische Schlauchwaage 5 mit insgesamt drei Schläuchen 6 vorgesehen, wobei an den vier Enden dieser Schlauchwaage 6 Sensoren B1 bis B4 vorgesehen sind.

Der Messwagen, also das Schienenfahrzeug 7, fährt mittels vier Laufrädern 8 auf zwei Schienen 9 des zu überprüfenden Gleises, wobei in an sich bekannter Weise vier Messräder R1 bis R4 vorgesehen sein können, die die Schienen 9 abtasten. Vorteilhaft können die Sensoren B1 bis B4 der elektronischen Schlauchwaage 5 nicht fest am Rahmen des Schienenfahrzeugs 7 vorgesehen sein, sondern vielmehr an Referenzpunkten, die mit den Messrädern R1 bis R4 in Verbindung stehen und beispielsweise höhenbeweglich gelagert sind. Bewegungen der Messräder R1 bis R4 in vertikaler Richtung wirken sich dadurch unmittelbar auf die Höhenlage des entsprechenden Sensors B1 bis B4 aus, so dass unabhängig von eventuellen Verformungen, Verwindungen oder ähnlichen Einflüssen des Messwagens 7 die Sensoren B1 bis B4 das tatsächliche Höhensignal erfassen, welches die Messräder R1 bis R4 durch Abtastung der Schiene liefern. Die Messräder R1 bis R4 sind zu diesem Zweck in vertikaler Richtung frei bzw. widerstandsarm beweglich, so dass sie präzise der Schienenoberfläche folgen können, wenn der Messwagen 7 über das Gleis fährt.

## Patentansprüche

1. Nivelliersystem für die Bahntechnik,
wobei mehrere Messpunkte mittels einer elektronischen Schlauchwaage miteinander verbunden sind,
derart, dass Höhenunterschiede zwischen den Messpunkten mittels der Sensoren der elektronischen Schlauchwaage erfassbar sind,
und wobei eine Auswerteelektronik vorgesehen ist, welche die Sensordaten erfasst und verarbeitet.
und wobei jedem Messpunkt ein höhenverstellbarer Aktuator zugeordnet ist,
und eine elektronische Steuerung vorgesehen ist, welche die Aktuatoren bedarfsweise derart ansteuert, dass diese den jeweiligen Messpunkt nach oben oder nach unten bewegen, bis alle Messpunkte in derselben horizontalen Ebene liegen.

2. Nivelliersystem nach Anspruch 1,
**dadurch gekennzeichnet,**
**dass** ein Messpunkt als Referenzpunkt bestimmt ist und die elektronische Steuerung die Aktuatoren der übrigen Messpunkte derart ansteuert, dass die übrigen Messpunkte auf ein definiertes Höhenniveau im Verhältnis zu dem Referenzpunkt - wie das gleiche Höhenniveau des Referenzpunktes - gebracht werden.

3. Nivelliersystem nach Anspruch 1 oder 2,
**dadurch gekennzeichnet,**
**dass** der Auswerteelektronik ein Datenspeicher zur Aufnahme der Sensordaten oder aus den Sensordaten ermittelter Daten zugeordnet ist.

4. Nivelliersystem nach einem der vorhergehenden Ansprüche,
**dadurch gekennzeichnet,**
**dass** an wenigstens einem der Messpunkte eine Koppelfläche vorgesehen ist, an welche ein Sensor der elektronischen Schlauchwaage lösbar angekoppelt ist.

5. Nivelliersystem nach Anspruch 4,
**dadurch gekennzeichnet,**
**dass** der Sensor magnetisch lösbar an der Koppelfläche gehalten ist.

6. Verfahren zum Nivellieren eines Eisenbahn-Wagenkastens,
wobei der Wagenkasten an mehreren Punkten jeweils mittels einer Hubeinrichtung angehoben wird,
und wobei diese Hebepunkte derart ausgerichtet werden,
dass sie in derselben horizontalen Ebene liegen,
**dadurch gekennzeichnet,**
**dass** ein Nivelliersystem nach einem der vorhergehenden Ansprüche verwendet wird, wobei die Hebepunkte als Messpunkte des Nivelliersystems dienen.

7. Verfahren nach Anspruch 6,
**dadurch gekennzeichnet,**
**dass** die Sensoren des Nivelliersystems an die Hubpratzen von Hebeeinrichtungen angeschlossen werden.

8. Verfahren nach Anspruch 7,
**dadurch gekennzeichnet,**
**dass** die Sensoren des Nivelliersystems an Referenzpunkte angeschlossen werden, die am Wagenkasten vorgesehen sind.

9. Verfahren nach einem der Ansprüche 6 bis 8, wobei ein Nivelliersystem nach Anspruch 4 verwendet wird,
**dadurch gekennzeichnet,**
**dass** die elektronische Schlauchwaage erst dann an die Messpunkte angeschlossen wird, wenn sich der Wagenkasten in einem Messstand befindet,
und **dass** die elektronische Schlauchwaage von den Messpunkten entkoppelt wird, wenn die Messung durchgeführt worden ist.

10. Verfahren zum Ausrichten eines Eisenbahn-Wagenkastens,
wobei der Wagenkasten an mehreren Punkten jeweils mittels einer Hubeinrichtung angehoben wird,
diese Hebepunkte derart ausgerichtet werden, dass sie jeweils in einer vorbestimmten Höhe liegen, bezogen auf die Höhe der jeweils anderen Messpunkte,
ein Nivelliersystem nach einem der Ansprüche 1 bis 5 verwendet wird,
und die Hebepunkte als Messpunkte des Nivelliersystems dienen.

11. Verfahren zum Vermessen eines Gleises,
wobei ein mehrere Messpunkte aufweisendes Nivelliersystem verwendet wird,
dessen Messpunkte mittels einer elektronischen Schlauchwaage miteinander verbunden sind,
derart, dass Höhenunterschiede zwischen den Messpunkten mittels der Sensoren der elektronischen Schlauchwaage erfassbar sind,
und eine Auswerteelektronik vorgesehen ist, welche die Sensordaten erfasst und verarbeitet.
und die Höhe der beiden Schienen des Gleises erfasst wird,
und die Messwerte oder daraus abgeleitete Daten elektronisch protokolliert werden.

12. Verfahren nach Anspruch 11,
**dadurch gekennzeichnet,**
**dass** das Nivelliersystem auf einem Schienenfahrzeug montiert ist,
und als Messpunkte definierte, am Schienenfahrzeug festgelegte Punkte dienen,
und **dass** die Messwerte aufgenommen werden, während das Schienenfahrzeug auf dem Gleis fährt.

13. Verfahren nach Anspruch 11 oder 12,
**dadurch gekennzeichnet,**
**dass** das Nivelliersystem wenigstens vier jeweils voneinander beabstandete Sensoren aufweist.

14. Nivellierverfahren nach einem der Ansprüche 6 bis 13,
**dadurch gekennzeichnet,**
**dass** die Sensoren des Nivelliersystems an eine horizontale Kalibrierfläche herangeführt und dann an dieser magnetisch gehalten werden,
und **dass** anschließend die Sensoren genullt werden, derart, dass sie das gleiche Höhenniveau anzeigen.
